# EUROPEAN PATENT APPLICATION

(11) **EP 2 230 272 A2**
(43) Date of publication of application: **22.09.2010**
(21) Application number: 10156243.7
(22) Date of filing: 11.03.2010
(51) Int. Cl.: C08K 9/10, C08J 3/00

(54) **In-situ polymerized nanocomposites**

(30) Priority: 17.03.2009 US 405516
(71) Applicant: General Electric Company, Schenectady, NY 12345 (US)
(72) Inventor: Irwin, Patricia Chapman, Altamont, NY 12009 (US); Tan, Daniel Qi, Rexford, NY 12148 (US); Fang, Xiaomei, Niskayuna, NY 12309 (US); Silvi, Norberto, Clifton Park, NY 12065 (US); Cao, Yang, Niskayuna, NY 12309 (US); Yin, Weijun, Niskayuna, NY 12309 (US)
(74) Representative: Szary, Anne Catherine

(57) **Abstract**

Disclosed herein is a method of making a polymer composition comprising blending a polymeric material precursor with nanoparticles, wherein each nanoparticle comprises a substrate and a coating composition disposed on the substrate; and polymerizing the polymeric material precursor to form a polymeric material, wherein the nanoparticles are dispersed within the polymeric material to form a polymer composition.

## Description

### FIELD OF THE INVENTION

This disclosure relates to high dielectric constant nanocomposites and methods of manufacture thereof.

### BACKGROUND OF THE INVENTION

It is desirable for energy storage devices, such as electrostatic capacitors, that are utilized in high energy density power conversion systems to withstand the high voltage and high temperature conditions for novel high temperature devices such as hybrid vehicles and power generation equipment. It is therefore desirable for such storage devices to have the capability of high dielectric breakdown strength and long life through corona resistance. Furthermore, it is also desirable to have a suitable high dielectric constant material that satisfies the electrical, reliability, and processing requirements for inclusion in capacitors into high temperature high energy density electronic circuits.

Highly engineered thermoplastics offer the best temperature stability and breakdown strength for capacitor applications, but the dielectric constant of these materials is low and the incorporation of nanofillers is extremely difficult. The energy density of a capacitor is related to the dielectric constant of the dielectric and the square of the breakdown strength. Thus, providing a dielectric with an improved dielectric constant and high breakdown strength enables capacitors to hold more charge in a smaller volume and lower mass. New electronic systems for commercial and military avionics, as well as military and commercial transportation systems, are requiring smaller capacitors with high energy capabilities that are able to operate at high temperatures.

In the electronics industry as well as in the automotive industry, there is a need for new polymeric composites having a high dielectric constant and a high breakdown strength as well as good mechanical strength and processability. It is therefore desirable to have a composition that combines a high dielectric constant with ease of processing as well as with improved mechanical properties when contrasted to currently existing high dielectric constant composites.

### BRIEF SUMMARY OF THE INVENTION

In one embodiment, a method comprises blending a polymeric material precursor with nanoparticles, wherein each nanoparticle comprises a substrate and a coating composition disposed on the substrate; and polymerizing the polymeric material precursor to form a polymeric material, wherein the nanoparticles are dispersed within the polymeric material to form a polymer composition.

### DETAILED DESCRIPTION OF THE INVENTION

Disclosed herein is a method of making a polymer composite composition having a high dielectric constant and high breakdown strength. The polymer composition comprises nanoparticles dispersed within a polymeric material, wherein each nanoparticle includes a substrate upon which is disposed a coating composition that has a dielectric constant that is different from that of the substrate. In a preferred embodiment, the substrate has a very high dielectric constant that is greater than that of the coating composition.

In one embodiment, the nanoparticles comprise an inorganic oxide and/or a ceramic substrate having a dielectric constant that is greater than that of the coating composition disposed upon the substrate. The coating composition facilitates compatibility between the nanoparticles and the polymeric material, which permits dispersion of the nanoparticles within the polymeric material. In one embodiment, the polymeric material comprises polymers that have a glass transition temperature of greater than or equal to about 100 degrees Celsius.

The polymer composition comprising the polymeric material and nanoparticles has a higher dielectric constant relative to the polymeric material alone while maintaining a breakdown resistance of greater than or equal to about 200 volts/micrometer.

The polymeric material present in the polymer composition may comprise a wide variety of thermoplastic polymers, thermosetting polymers, blends of thermoplastic polymers, or blends of thermoplastic polymers with thermosetting polymers. The polymeric material can comprise a homopolymer, a copolymer such as a star block copolymer, a graft copolymer, an alternating block copolymer or a random copolymer, ionomer, dendrimer, or a combination comprising at least one of the foregoing. The polymeric material may also be a blend of polymers, copolymers, terpolymers, or the like, or a combination comprising at least one of the foregoing.

Examples of thermoplastic polymers that can be used in the polymeric material include polyacetals, polyacrylics, polycarbonates, polyalkyds, polystyrenes, polyolefins, polyesters, polyamides, polyaramides, polyamideimides, polyarylates, polyurethanes, epoxies, phenolics, silicones, polyarylsulfones, polyethersulfones, polyphenylene sulfides, polysulfones, polyimides, polyetherimides, polytetrafluoroethylenes, polyetherketones, polyether etherketones, polyether ketone ketones, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polypropylenes, polyethylenes, polyethylene terephthalates, polyvinylidene fluorides, polysiloxanes, or the like, or a combination comprising at least one of the foregoing thermoplastic polymers.

Exemplary polymers include polyetherimides, polyphenylene ethers, polyethylene terephthalates, polyethylenes, polypropylenes, polyimides, polyvinylidene fluorides, or a combination comprising at least one of the foregoing polymers. An exemplary polymer is ULTEM®, a polyetherimide, commercially available from Sabic Innovative Plastics, Pittsfield, MA.

Examples of blends of thermoplastic polymers include acrylonitrile-butadiene-styrene/nylon, polycarbonate/acrylonitrile-butadiene-styrene, polyphenylene ether/polystyrene, polyphenylene ether/polyamide, polycarbonate/polyester, polyphenylene ether/polyolefin, or the like, or a combination comprising at least one of the foregoing.

Examples of thermosetting polymers that can be blended with the thermoplastic polymers are resins of epoxy/amine, epoxy/anhydride, isocyanate/amine, isocyanate/alcohol, unsaturated polyesters, vinyl esters, unsaturated polyester and vinyl ester blends, unsaturated polyester/urethane hybrid resins, polyurethane-ureas, reactive dicyclopentadiene (DCPD) resin, reactive polyamides, or the like, or a combination comprising at least one of the foregoing.

In one embodiment, the polymer composition has a glass transition temperature of greater than or equal to about 100 degrees Celsius. In one embodiment, the polymer composition has a glass transition temperature of greater than or equal to about 175 degrees Celsius. In another embodiment, the polymer composition has a glass transition temperature of greater than or equal to about 210 degrees Celsius. In yet another embodiment, the polymer composition has a glass transition temperature of greater than or equal to about 245 degrees Celsius. In yet another embodiment, the polymer composition has a glass transition temperature of greater than or equal to about 290 degrees Celsius.

In one embodiment, the polymer composition comprises from about 5 weight percent to about 99.999 weight percent of the polymeric material based on the total weight of the polymer composition. In another embodiment, the polymeric material is present in an amount of about 10 weight percent to about 99.99 weight percent based on the total weight of the polymer composition. In another embodiment, the polymeric material is present in an amount of about 30 weight percent to about 99.5 weight percent. In another embodiment, the polymeric material is present in an amount of about 50 weight percent to about 99.3 weight percent based on the total weight of the polymer composition.

As noted above, the nanoparticles can comprise a substrate with a coating composition disposed thereon. Examples of materials suitable for use as the substrate include metals, ceramics, borides, carbides, silicates, chalcogenides, hydroxides, metal oxides, nitrides, perovskites and perovskites derivatives, phosphides, sulfides, and silicides, semiconductors such as silicon, silicon carbide or the like, or a combination comprising at least one of the foregoing.

Suitable metals include transition, lanthanide, actinide, alkali, alkaline earth metals, or the like, or a combination comprising at least one of the foregoing. Exemplary metals include aluminum, copper, iron, nickel, palladium, silver, titanium, or the like, or a combination comprising at least one of the foregoing metals.

Exemplary borides include aluminum boride, titanium boride, or the like, or a combination comprising at least one of the foregoing borides. Exemplary carbides include silicon carbide, titanium carbide, tungsten carbide, iron carbide, or the like, or a combination comprising at least one of the foregoing carbides. Exemplary chalcogenides include bismuth telluride, bismuth selenide, or the like, or a combination comprising at least one of the foregoing chalcogenides. Exemplary nitrides include silicon nitride, boron nitride, titanium nitride, aluminum nitride, molybdenum nitride, vanadium nitride, or the like, or a combination comprising at least one of the foregoing nitrides.

Silicates that may be used as substrates or coatings include metal silicates wherein the metals are from Group 2A of the Periodic Table, i.e., berrylium (Be), magnesium (Mg), calcium (Ca), strontium (Sr), barium (Ba) and radium (Ra). Preferred metal silicates include Mg₂SiO₄, CaSiO₃, BaSiO₃ and SrSiO₃. In addition to Group 2A metals, the present metal silicates may include metals from Group 1A, i.e., lithium (Li), sodium (Na), potassium (K), rubidium (Rb), cesium (Cs) and francium (Fr). For example, metal silicates may include sodium silicates such as Na₂SiO₃ and NaSiO₃-5H₂O, lithium silicates such as LiAlSiO₄, Li2SiO₃ and Li₄SiO₄. Additional metal silicates may include Al₂Si₂O₇, ZrSiO₄, KAlSi₃O₈, NaAlSi₃O₈, CaAl₂Si₂O₈, CaMgSi₂O₆, BaTiSi₃O₉, Zn₂SiO₄ or a combination comprising at least one of the foregoing silicates.

Exemplary hydroxides include aluminum hydroxide, calcium hydroxide, barium hydroxide, or the like, or a combination comprising at least one of the foregoing hydroxides.

Exemplary oxides include zirconates, titanates, aluminates, silicates, stannates, niobates, tantalates and rare earth oxides and combinations thereof. Exemplary inorganic oxides include silica, aluminum oxide, silicon dioxide, calcium oxide, cerium oxide, copper oxide, titanium oxide, zinc oxide, zirconium oxide, tantalum oxide, niobium oxide, yttrium oxide, magnesium oxide, Mg₂SiO₄, MgO, CaTiO₃, MgZrSrTiO₆, MgTiO₃, MgAl₂O₄, WO₃, SnTiO₄, ZrTiO₄, CaSiO₃, CaSnO₃, CaWO₄, CaZrO₃, MgTa₂O₆, MgZrO₃, MnO₂, PbO, Bi₂O₃ and La₂O₃, CaZrO₃, BaZrO₃, SrZrO₃, BaSnO₃, CaSnO₃, MgSnO₃, Bi₂O₃/2SnO₂, Nd₂O₃, Pr₇O₁₁, Yb₂O₃, Ho₂O₃, La₂O₃, MgNb₂O₆, SrNb₂O₆, BaNb₂O₆, MgTa₂O₆, BaTa₂O₆, Ta₂O₃, or the like, or a combination comprising at least one of the foregoing oxides. Exemplary metal oxides include Mg₂SiO₄, MgO, CaTiO₃, MgZrSrTiO₆, MgTiO₃, MgAl₂O₄, MgTa₂O₆, MgZrO₃, or the like, or a combination comprising at least one of the foregoing inorganic oxides.

Exemplary perovskites and perovskite derivatives include barium titanate (BaTiO₃), strontium titanate (SrTiO₃) barium strontium titanate, strontium-doped lanthanum manganate, lanthanum aluminum oxides (LaAlO₃), lanthanum strontium copper oxides (LSCO), yttrium barium copper oxides (YBa₂Cu₃O₇), lead zirconate titanate, lanthanum-modified lead zirconate titanate, or the like, combinations of lead magnesium niobate-lead titanate, or a combination comprising at least one of the foregoing perovskites and perovskite derivatives. Perovskites that exemplify the giant dielectric phenomenon such as, for example, calcium-copper-titanium-oxides (CCTOs) having the formula (I) can also be included:

ACu₃Ti₄O₁₂ (I)

where A is calcium (Ca) or cadmium (Cd).

In another embodiment, perovskites having the formula (II) can be included:

A'_{2/3}Cu₃Ti₃FeO₁₂ (II)

where A' is bismuth (Bi), yttrium (Y).

In yet another embodiment, perovskites termed lithium and titanium co-doped nickel oxide (LTNO) having the general formula (III) can be included:

LiₓTi_{y}Ni_{1-x-y}O (III)

where x is less than or equal to about 0.3 and y is less than or equal to about 0.1.

Exemplary phosphides include nickel phosphide, vanadium phosphide, or the like, or a combination comprising at least one of the foregoing phosphides. Exemplary silicides include molybdenum silicide. Exemplary sulfides include molybdenum sulfide, titanium sulfide, tungsten sulfide, or the like, or a combination comprising at least one of the foregoing sulfides.

The substrates have at least one dimension in the nanometer range. It is generally desirable for the substrates to have an average largest dimension that is less than or equal to about 500 nm. The dimension may be a diameter, edge of a face, length, or the like. The substrates may have shapes whose dimensionalities are defined by integers, e.g., the inorganic oxide substrates are either 1, 2 or 3-dimensional in shape. They may also have shapes whose dimensionalities are not defined by integers (e.g., they may exist in the form of fractals). The substrates may exist in the form of spheres, flakes, fibers, whiskers, or the like, or a combination comprising at least one of the foregoing forms. These substrates may have cross-sectional geometries that may be circular, ellipsoidal, triangular, rectangular, polygonal, or a combination comprising at least one of the foregoing geometries. The substrates, as commercially available, may exist in the form of aggregates or agglomerates prior to incorporation into the polymeric material or even after incorporation into the polymeric material. An aggregate comprises more than one substrate in physical contact with one another, while an agglomerate comprises more than one aggregate in physical contact with one another.

The substrates are added in amounts of about 0.05 to about 50 weight percent of the total weight of the nanoparticles. In one embodiment, the substrates are added in amounts of about 0.1 to about 30 weight percent of the total weight of the nanoparticles. In another embodiment, the substrates are added in amounts of about 1 to about 25 weight percent of the total weight of the nanoparticles. In yet another embodiment, the substrates are added in amounts of about 3 to about 20 weight percent of the total weight of the nanoparticles.

Commercially available examples of nanosized inorganic oxide substrates are NANOACTIVE™ calcium oxide, NANOACTIVE™ calcium oxide plus, NANOACTIVE™ cerium oxide, NANOACTIVE™ magnesium oxide, NANOACTIVE™ magnesium oxide plus, NANOACTIVE™ titanium oxide, NANOACTIVE™ zinc oxide, NANOACTIVE™ silicon oxide, NANOACTIVE™ copper oxide, NANOACTIVE™ aluminum oxide, NANOACTIVE™ aluminum oxide plus, all commercially available from NanoScale Materials Incorporated. A commercially available example of nanosized nitride is BORONID™ boron nitride, available from ESK (Kempten, Germany).

The coating composition can comprise a single layer or a plurality of layers. When the coating composition is disposed upon the substrate in one or more layers, at least one layer has a different dielectric constant from that of the other layers or that of the substrate when the substrate is non-metallic. In one embodiment, some of the layers may have a dielectric constant that is similar to that of other layers, but have a different chemical composition. In one embodiment, the coating composition layers are arranged upon the substrate such that the innermost layer has the highest dielectric constant of all the layers while the outermost layer has the lowest dielectric constant. In one embodiment, the innermost layer of the coating composition has the highest dielectric constant while each subsequent outer layer has a lower dielectric constant than the preceding inner layer. In other words, each layer has a lower dielectric constant than the dielectric constant of an inner layer that is closer to the center of the nanoparticle.

The surface of the nanoparticles may comprise functional groups, e.g. hydroxyl groups, which increases the affinity of the nanoparticles for the polymeric precursor polymer, thereby improving dispersion of the nanoparticles within the polymeric material.

The coating composition can comprise some of the aforementioned materials that are used to form the substrate. For example, the nanoparticle can comprise an aluminum metal substrate coated with an aluminum oxide layer. In another example, the nanoparticle can comprise a titanium oxide substrate upon which is disposed an inner layer of aluminum oxide and an outer layer of silicon dioxide. In yet another example, the nanoparticle can comprise a strontium-doped titanium oxide substrate upon which is disposed a boron nitride layer. An example of a suitable nanoparticle comprising a plurality of layers with decreasing dielectric constants is a barium titanate substrate having a dielectric constant k=3000 coated with the following layers from inside to outside in the following order: lanthanum-modified PZT(k=1000)-PZT(k=500)-SrTiO₃(k=250)-TiO₂(k=104)-Al₂O₃(k=9.6)-SiO₂(k=3.9).

In one embodiment, each layer of the coating composition can have a thickness of less than or equal to about ten nanometers. In another embodiment, each layer of the coating composition can have a thickness of less than or equal to about five nanometers. In yet another embodiment, each layer of the coating composition can have a thickness of less than or equal to about two nanometers. The deposition of the coating composition on the substrates may be carried out in a solution or directly in the presence of the components that are used to form the coating composition. When the deposition is carried out in a solution, an appropriate solvent may be used. In one method of coating the substrates, the substrates can be optionally heated to a suitable temperature in a mixer such as for example an Eirich mixer, following which a solution comprising the coating composition or reactive precursors to the coating composition is added to the mixer. The substrates are mixed in the presence of the solution for a time period effective to uniformly coat the substrates. The temperature may be raised or lowered during the process of mixing to facilitate the coating. Following coating, the nanoparticles are dried to remove any unreacted precursors and also to remove any solvents that may be present. The dried particles may be subjected to a sintering step in order to further react the reactive precursors of the coating composition.

In one embodiment, the coated particle may be subjected to a second coating process to coat the nanoparticle with a second layer having a composition similar to that of the first layer. In another embodiment, the coated particle may be subjected to a second coating process to coat the nanoparticle with a second layer having a different composition from that of the first layer.

In yet another embodiment, directed to the development of the nanoparticles, a substrate comprising a metal is oxidized, carburized or nitrided to form a ceramic layer upon the substrate. The process is sometimes referred to as passivation of a metal surface. In an exemplary embodiment, a substrate comprising aluminum is oxidized to form a layer of aluminum oxide upon the aluminum. The nanoparticle comprising the aluminum oxide coating disposed upon the aluminum substrate are then dispersed into a polymeric material to form the composition.

In yet another embodiment, the substrate can be coated with the coating composition by processes such as chemical vapor deposition (CVD), atomic layer deposition (ALD), expanding thermal plasma (ETP), ion plating, plasma enhanced chemical vapor deposition (PECVD), metal organic chemical vapor deposition (MOCVD) (also called Organometallic Chemical Vapor Deposition (OMCVD)), metal organic vapor phase epitaxy (MOVPE), physical vapor deposition processes such as sputtering, reactive electron beam (e-beam) deposition, and plasma spray.

In one embodiment, the nanoparticles can optionally be surface treated to facilitate bonding or adhesion with the polymeric material. In one embodiment, the surface treatment comprises coating the nanoparticles with a silane-coupling agent. Examples of suitable silane-coupling agents include tetramethylchlorosilane, hexadimethylenedisilazane, gamma-aminopropoxysilane, or the like, or a combination comprising at least one of the foregoing silane coupling agents. The silane-coupling agents generally enhance compatibility of the nanoparticles with the polymeric material and improve dispersion of the nanoparticles within the polymeric material. As noted above, the nanoparticles have at least one dimension in the nanometer range. It is generally desirable for the nanoparticles to have an average largest dimension that is less than or equal to about 1,000 nm. The dimension may be a diameter, edge of a face, length, or the like. In one embodiment, the shape and geometry of the nanoparticles can be the same as that of the substrate. In another embodiment, the shape and geometry of the nanoparticles can be different from that of the substrate.

The nanoparticles may have shapes whose dimensionalities are defined by integers, e.g., the inorganic oxide nanoparticles are either 1, 2 or 3-dimensional in shape. They may also have shapes whose dimensionalities are not defined by integers (e.g., they may exist in the form of fractals). The nanoparticles may exist in the form of spheres, flakes, fibers, whiskers, or the like, or a combination comprising at least one of the foregoing forms. These nanoparticles may have cross-sectional geometries that may be circular, ellipsoidal, triangular, rectangular, polygonal, or a combination comprising at least one of the foregoing geometries. The nanoparticles, as commercially available, may exist in the form of aggregates or agglomerates prior to incorporation into the polymeric material or even after incorporation into the polymeric material. An aggregate comprises more than one nanoparticle in physical contact with one another, while an agglomerate comprises more than one aggregate in physical contact with one another.

Regardless of the exact size, shape and composition of the nanoparticles, they may be present in the polymeric material at loadings of about 0.0001 to about 50 weight percent based on the total weight of the polymer composition when desired. In one embodiment, the nanoparticles are present in an amount of greater than or equal to about 1 weight percent based on the total weight of the polymer composition. In another embodiment, the nanoparticles are present in an amount of greater than or equal to about 1.5 weight percent of the total weight of the polymer composition. In another embodiment, the nanoparticles are present in an amount of greater than or equal to about 2 weight percent of the total weight of the polymer composition. In one embodiment, the nanoparticles are present in an amount of less than or equal to 40 weight percent based on the total weight of the composition. In another embodiment, the nanoparticles are present in an amount of less than or equal to about 30 weight percent based on the total weight of the polymer composition. In another embodiment, the nanoparticles are present in an amount of less than or equal to about 25 weight percent of the total weight based on the polymer composition.

The polymer composition is formed by blending the nanoparticles with the polymeric material precursor and any optional fillers, followed by in-situ polymerization of the polymeric material precursor. The nanoparticles can be blended with the polymeric material precursor in several different ways such as, but not limited to melt blending, solution blending, or the like, or a combination comprising at least two of the foregoing methods of blending. The polymerization reaction can occur subsequent to, or during the blending step(s).

Various techniques may be used to polymerize the polymeric material precursor, including but not limited to solution polymerization, melt polymerization, or a combination thereof. Hybrid polymerization processes using solution polymerization followed by melt polymerization are disclosed in U.S. Patent No. 7,053,168 and U.S. Patent No. 6,790,929 which are both incorporated herein by reference. Melt polymerization and melt blending involve the use of shear force, extensional force, compressive force, ultrasonic energy, electromagnetic energy, thermal energy or a combination comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or a combination comprising at least one of the foregoing.

Melt polymerization or melt blending involving the aforementioned forces may be conducted in machines such as, but not limited to, single or multiple screw extruders, Buss kneader, Henschel, helicones, Ross mixer, Banbury, roll mills, molding machines such as injection molding machines, vacuum forming machines, blow molding machine, or then like, or a combination comprising at least one of the foregoing machines. It is generally desirable during melt (or solution) polymerization or blending of the polymeric material precursor to impart a specific energy of about 0.01 to about 10 kilowatt-hour/kilogram (kwhr/kg) to the composition. Within this range, a specific energy of greater than or equal to about 0.05, preferably greater than or equal to about 0.08, and more preferably greater than or equal to about 0.09 kwhr/kg is generally desirable. Also desirable is an amount of specific energy less than or equal to about 9, preferably less than or equal to about 8, and more preferably less than or equal to about 7 kwhr/kg.

In one embodiment, the polymeric material precursor may be first dry blended with the nanoparticles and other optional fillers if desired in a Henschel or a roll mill, prior to being fed into a melt blending/polymerization device such as an extruder or Buss kneader. In another embodiment, the nanoparticles are introduced into the melt blending/polymerization device in the form of a masterbatch. In such a process, the masterbatch may be introduced into the melt device downstream of the polymeric material precursor.

When a masterbatch is used, the nanoparticles may be present in the masterbatch in an amount of about 20 to about 50 weight percent, of the total weight of the masterbatch. In one embodiment, the nanoparticles are used in an amount of greater than or equal to about 22.5 weight percent of the total weight of the masterbatch. In another embodiment, the nanoparticles are used in an amount of greater or equal to about 25 weight percent, of the total weight of the masterbatch. In another embodiment, the nanoparticles are used in an amount of greater than or equal to about 30 weight percent, of the total weight of the masterbatch. In one embodiment, the nanoparticles are used in an amount of less than or equal to about 45 weight percent, of the total weight of the masterbatch. In another embodiment, the nanoparticles are used in an amount of less than or equal to about 40 weight percent, of the total weight of the masterbatch. In another embodiment, the nanoparticles are used in an amount of less than or equal to about 35 weight percent, of the total weight of the masterbatch.

Solvents may be used in the solution blending of the composition. The solvent may be used as a viscosity modifier, or to facilitate the dispersion and/or suspension of nanoparticles in the polymeric material precursor. Liquid aprotic polar solvents such as propylene carbonate, ethylene carbonate, butyrolactone, acetonitrile, benzonitrile, nitromethane, nitrobenzene, sulfolane, dimethylformamide, N- methylpyrrolidone, or the like, or a combination comprising at least one of the foregoing solvents may be used. Polar protic solvents such as water, methanol, acetonitrile, nitromethane, ethanol, propanol, isopropanol, butanol, or the like, or a combination comprising at least one of the foregoing polar protic solvents may be used. Other non-polar solvents such benzene, toluene, methylene chloride, carbon tetrachloride, hexane, diethyl ether, tetrahydrofuran, or the like, or a combination comprising at least one of the foregoing solvents may also be used if desired. Co-solvents comprising at least one aprotic polar solvent and at least one non-polar solvent may also be used. In one embodiment, the solvent is xylene or N-methylpyrrolidone.

If a solvent is used, it may be utilized in an amount of about 1 to about 50 weight percent, of the total weight of the composition. In one embodiment, if a solvent is used, it may be utilized in an amount of about 3 to about 30 weight percent, of the total weight of the composition. In yet another embodiment, if a solvent is used, it may be utilized in an amount of about 5 to about 20 weight percent, of the total weight of the composition. It is generally desirable to evaporate the solvent before, during and/or after the blending of the composition.

Blending can be assisted using various secondary species such as dispersants, binders, modifiers, detergents, and additives. Secondary species may also be added to enhance one to more of the properties of the composition.

The solution blending or polymerization may also use additional energy such as shear, compression, ultrasonic vibration, or the like to promote homogenization of the nanoparticles with the polymeric material. In one embodiment, a polymeric material precursor suspended in a solvent may be introduced into an ultrasonic sonicator along with the nanoparticles. The mixture may be sonicated for a time period effective to disperse the nanoparticles within the polymeric material precursor and polymerize the precursor. The polymer composition may then be dried, extruded and molded if desired. It is generally desirable for the solvent to swell the polymeric material precursor during the process of sonication. Swelling the polymeric material precursor generally improves the ability of the nanoparticles to impregnate the polymeric material precursor during the solution blending and solution polymerization process and consequently improves dispersion.

In one embodiment, after solution blending the polymeric material precursor, nanoparticles and optional fillers, the well-mixed suspension is processed through a continuous processor such as an extruder, to complete the in-situ polymerization reaction and build the polymeric material molecular weight. Removal of the polymerization solvent by interfacial devolatization renders the nanocomposite polymer composition solvent free. Alternatively, the molten polymer composition exiting the extruder can be stretched into a thin film in a single process step that can be metalized in a subsequent step and used to fabricate a capacitor.

Polymeric material precursors are generally monomers, or oligomers including dimers, trimers, or the like, which can be reacted into polymeric materials. Suitable examples of monomers that may be used in the polymeric material precursor are those used in the synthesis of polymers such as, but not limited to amic acids, polyacetals, polyacrylics, polycarbonates, polystyrenes, polyesters, polyamides, polyamideimides, polyarylates, polyurethanes, polyarylsulfones, polyethersulfones, polyarylene sulfides, polyvinyl chlorides, polysulfones, polyetherimides, polytetrafluoroethylenes, polyetherketones, polyether etherketones, or the like, or a combination comprising at least one of the foregoing. In an exemplary embodiment, the polymeric material precursor comprises an amic acid. Amic acids have carboxylic acid functionality, and some of the nanoparticles, such as alumina nanoparticles, have a great affinity for this functionality. This interaction between the polymeric material precursor and the nanoparticles is an excellent means to maintain dispersion during the polymerization process, and also results in an increase in the breakdown strength of the polymer composition. In one embodiment, the mixture of polymeric material, polymeric material precursor, fluid and/or the nanoparticles is sonicated for a period of about 1 minute to about 24 hours. In another embodiment, the mixture is sonicated for a period of greater than or equal to about 5 minutes. In another embodiment, the mixture is sonicated for a period of greater than or equal to about 10 minutes. In another embodiment, the mixture is sonicated for a period of greater than or equal to about 15 minutes. In one embodiment, the mixture is sonicated for a period of less than or equal to about 15 hours. In another embodiment, the mixture is sonicated for a period of less than or equal to about 10 hours. In another embodiment, the mixture is sonicated for a period of less than or equal to about 5 hours.

The polymer composition comprising the polymeric material and the nanoparticles may be subjected to multiple forming steps if desirable. For example, the composition may be extruded and formed into pellets. The pellets may be fed into a molding machine where it may be formed into other desirable shapes. Alternatively, the polymer composition emanating from a single melt blender may be formed into sheets or strands and subjected to post-extrusion processes such as annealing, uniaxial or biaxial orientation.

A polymer composition comprising a polymeric material and nanoparticles has advantages over the polymeric material alone or other commercially available compositions that comprise a polymeric material and particles having particle sizes in the micrometer range. In one embodiment, the polymer composition has a dielectric constant that is at least 10% greater than a composition comprising polymeric material alone. In another embodiment, the polymer composition has a dielectric constant that is at least 50% greater than the polymeric material alone. In another embodiment, the polymer composition has a dielectric constant that is at least 100% greater than the polymeric material alone.

The polymer composition also has a breakdown voltage that is advantageously greater than the polymeric material alone or other commercially available compositions that comprise a polymeric material and particles having particle sizes in the micrometer range. In one embodiment, the polymer composition has a breakdown voltage that is at least 150 Volts/micrometer (V/micrometer). The breakdown voltage is generally determined in terms of the thickness of the composition. In another embodiment, the polymer composition has a breakdown voltage that is at least 300 V/micrometer. In another embodiment, the polymer composition has a breakdown voltage that is at least 400 V/micrometer. In another embodiment, the polymer composition has a breakdown voltage that is at least 500 V/micrometer. In yet another embodiment, the polymer composition has a breakdown voltage that is at least 600 V/micrometer.

The polymer composition also has a corona resistance that is advantageously greater than the polymeric material alone or other commercially available compositions that comprise a polymeric material and particles having particle sizes in the micrometer range. In one embodiment, the polymer composition has a corona resistance that is resistant to a voltage of about 1000 volts to 5000 volts applied for about 200 hours to about 2000 hours. In another embodiment, the polymer composition has a corona resistance that is resistant to a voltage of about 1000 volts to 5000 volts applied for about 250 hours to about 1000 hours. In yet another embodiment, the polymer composition has a corona resistance that is resistant to a voltage of about 1000 volts to 5000 volts applied for about 500 hours to about 900 hours.

The polymer composition has a dielectric constant greater than or equal to about 3 when measured at frequencies of about 0.1 to about 10⁵ Hertz (Hz). In one embodiment, the composition has a has a dielectric constant greater than or equal to about 5 when measured at frequencies of about 0.1 to about 10⁵ Hz. In yet another embodiment, the polymer composition has a dielectric constant greater than or equal to about 10 when measured at frequencies of about 0.1 to about 10⁵ Hz. In yet another embodiment, the polymer composition has a has a dielectric constant greater than or equal to about 50 when measured at frequencies of about 0.1 to about 10⁵ Hz.

In another embodiment, the polymer composition also has an impact strength of greater than or equal to about 5 kiloJoules per square meter (kJ/m²). In another embodiment, the polymer composition has an impact strength of greater than or equal to about 10 kJ/m². In another embodiment, the polymer composition has an impact strength of greater than or equal to about 15 kJ/m². In another embodiment, the polymer composition has an impact strength of greater than or equal to about 20 kJ/m².

Polymer compositions that comprise the nanoparticles may also be optically transparent. In one embodiment, the polymer compositions have a transmissivity to visible light of greater than or equal to about 70%. In another embodiment, the polymer compositions have a transmissivity to visible light of greater than or equal to about 80%. In yet another embodiment, the polymer compositions have a transmissivity to visible light of greater than or equal to about 90%. In yet another embodiment, the polymer compositions have a transmissivity to visible light of greater than or equal to about 95%.

The polymer composition can be used to fabricate thin films having a thickness equal to or less than about 200 micrometers. In one embodiment, the film has a thickness equal to or less than about 100 micrometers. In one embodiment, the film has a thickness equal to or less than about 50 micrometers. In another embodiment, the film has a thickness equal to or less than about 30 micrometers. In another embodiment, the film has a thickness equal to or less than about 10 micrometers. In another embodiment, the film has a thickness equal to or less than about 5 micrometers.

In yet another embodiment, the composition also has a Class A surface finish when molded. Molded articles can be manufactured by injection molding, blow molding, compression molding, or the like, or a combination comprising at least one of the foregoing.

The composition can advantageously be used in spark plug caps, capacitors, defibrillators, printed wiring boards, or other articles. The polymer composition is particularly useful in high temperature capacitors having an operating temperature up to about 200 degrees Celsius. In another embodiment, the polymer composition is used to form a capacitor having an operating temperature up to about 300 degrees Celsius.

The following examples, which are meant to be exemplary, not limiting, illustrate compositions and methods of manufacturing of some of the various embodiments of the compositions and the methods of manufacture described herein.

### EXAMPLES

### Example 1

Hydroxyl groups on the surface of silica nanoparticles were reacted with an amino-terminated silane to passivate the surface of the nanoparticles. The functionalized nanoparticles were combined with polyamic acid in a solvent. The solution was sonicated to enhance the nanoparticle dispersion prior to the polymerization reaction. A thin film of the nanocomposite was cast and the polymer composition was cured and devolatized. The breakdown strength of the resulting nanocomposite film was between about 500 and about 600 V/micrometer.

### Example 2

Hydroxyl groups on the surface of alumina nanoparticles were reacted with polyamic acid in a solvent. The solution was sonicated to enhance the nanoparticle dispersion prior to the polymerization reaction. A thin film of the nanocomposite was cast and the polymer composition was cured and devolatized. The breakdown strength of the resulting nanocomposite film was between about 500 and about 600 V/micrometer

All ranges disclosed herein are inclusive of the endpoints, and the endpoints are combinable with each other. The terms "first," "second," and the like as used herein do not denote any order, quantity, or importance, but rather are used to distinguish one element from another. The modifiers "about" and "approximately" used in connection with a quantity are inclusive of the stated value and have the meaning dictated by the context (e.g., includes the degree of error associated with measurement of the particular quantity). The use of the terms "a" and "an" and "the" and similar referents in the context of describing the invention (especially in the context of the following claims) are to be construed to cover both the singular and the plural, unless otherwise indicated herein or clearly contradicted by context.

While the invention has been described in detail in connection with a number of embodiments, the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of making a polymer composition comprising:
blending a polymeric material precursor with nanoparticles, wherein each nanoparticle comprises a substrate and a coating composition disposed on the substrate; and
polymerizing the polymeric material precursor to form a polymeric material, wherein
the nanoparticles are dispersed within the polymeric material to form a polymer composition.

2. The method of claim 1, wherein the polymeric material precursor and nanoparticles are blended by solution blending, melt blending, or a combination thereof.

3. The method of claim 1 or claim 2, wherein the polymeric material precursor and nanoparticles are blended by solution blending comprising:
combining the polymeric material precursor, nanoparticles and a solvent.

4. The method of claim 3, wherein solution blending further comprises:
sonicating the polymeric material precursor, nanoparticles and solvent.

5. The method of any preceding claim, wherein the polymeric material precursor comprises a monomer or an oligomer.

6. The method of any preceding claiim, wherein the polymeric material precursor comprises carboxylic acid functionality.

7. The method of any preceding claim, wherein the surface of at least some of the nanoparticles comprises a functional group.

8. The method of any preceding claim, further comprising:
passivating the surface of the nanoparticles prior to blending the nanoparticles with the polymeric material precursor.

9. The method of any preceding claim, wherein the polymeric material precursor is polymerized by solution polymerization, melt polymerization, or a combination thereof.

10. The method of any preceding claim, wherein the substrate has a higher dielectric constant than the dielectric constant of the coating composition.

11. The method of claim 1, wherein the coating composition comprises one or more layers.

12. The method of claim 11, wherein a dielectric constant of an innermost layer is greater than a dielectric constant of an outermost layer.

13. The method of any preceding claim, wherein the substrate comprises a metal, ceramic, boride, carbide, silicate, chalcogenide, hydroxide, metal, metal oxide, nitride, perovskite, perovskite derivative, phosphide, sulfide, silicide, or a combination comprising at least one of the foregoing.

14. The method of any preceding claim, wherein the coating composition comprises a ceramic, boride, carbide, silicate, chalcogenide, hydroxide, metal, metal oxide, nitride, perovskite, perovskite derivative, phosphide, sulfide, silicide, or a combination comprising at least one of the foregoing.

15. The method of claim 1, wherein the polymeric composition has a breakdown voltage of at least 150 volts/micrometer.
